# EUROPÄISCHE PATENTSCHRIFT

(11) **EP 0 709 567 B1**
(45) Veröffentlichungstag und Bekanntmachung des Hinweises auf die Patenterteilung: **25.02.1998**
(21) Anmeldenummer: 95115509.2
(22) Anmeldetag: 30.09.1995
(51) Int. Cl.: F02M 35/14, F02M 35/024, B01D 46/42

(54) **Filtervorrichtung zum Filtrieren der Ansaugluft einer Brennkraftmaschine**
Intake air filter device for combustion engines
Dispositif de filtrage d'air d'admission pour des moteurs à combustion

(30) Priorität: 28.10.1994 DE 4438556
(43) Veröffentlichungstag der Anmeldung: 01.05.1996
(73) Patentinhaber: FILTERWERK MANN & HUMMEL GMBH, D-71631 Ludwigsburg (DE)
(72) Erfinder: Müller, Heinz, D-71686 Remseck (DE)
(74) Vertreter: Voth, Gerhard, Dipl.-Ing.

(56) Entgegenhaltungen:
- EP-A- 0 534 079
- EP-A- 0 574 605
- CH-A- 593 426
- DE-A- 4 216 816
- FR-A- 1 251 396
- US-A- 4 929 263
- PATENT ABSTRACTS OF JAPAN vol. 10 no. 227 (M-505) [2283] ,7.November 1986 & JP-A-61 061958 (YAMAHA MOTOR CO. LTD.) 29.März 1986,
- PATENT ABSTRACTS OF JAPAN vol. 9 no. 187 (M-401) [1910] ,3.August 1985 & JP-A-60 053658 (HONDA GIKEN KOGYO KK) 27.März 1985,
- PATENT ABSTRACTS OF JAPAN vol. 9 no. 149 (M-390) [1872] ,25.Juni 1985 & JP-A-60 026157 (NISSAN JIDISHA KK) 9.Februar 1985,

## Beschreibung

Die Erfindung betrifft ein Filter, insbesondere zum Filtrieren der Ansaugluft einer Brennkraftmaschine bestehend aus einem Rohlufteinlaß, einem Gehäuse, einem in dem Gehäuse angeordnetem Filtereinsatz sowie einem Reinluftauslaß.

Ein solches Filter ist beispielsweise aus der US-A-4 929 263 bekannt. Bei diesem Filter ist ein besonderes Gehäuse vorgesehen. Dieses Gehäuse besteht aus einem Stützkörper. In diesem Stützkörper ist der Filtereinsatz eingefügt. Der Stützkörper wird in Blasformtechnik mit dem Gehäuse ummantelt. Das Gehäuse kann relativ dünnwandig ausgestaltet werden.

Ein Nachteil dieses Filters ist jedoch darin zu sehen, daß ein Austausch des Filtereinsatzes nicht möglich ist. Bei den regelmäßig durchzuführenden Wartungsintervallen muß das komplette Filter einschließlich des Stützkörpers und des Gehäuses ausgetauscht werden. Damit fallen sehr hohe Entsorgungskosten an und es entstehen große Mengen unsortiertem Abfall.

Es ist weiterhin aus der EP-A-524 333 (A1) ein Verfahren zur Herstellung eines gegossenen Hohlkörpers bekannt. Dieser Hohlkörper, der ebenfalls als Filtergehäuse verwendbar ist, wird mittels eines Hohlformkerns aus nicht metallischem Werkstoff hergestellt.

Der Hohlformkern ist ein dünnwandiger, erst durch einen inneren Gasstützdruck gegenüber dem äußeren Gießdruck stabilisierbarer jedoch bereits konturierter Kern. Er ist entweder verloren oder aus dem gegossenen Hohlkörper nach dessen Erstarren durch Rückschmelzen bzw. Rücklösen entfernbar. Mit diesem Verfahren sind zwar Komplexe, insbesondere für eine betriebsmäßige Nutzung zum Beispiel eine Gasdurchströmung vorgesehene gegossener Hohlkörper herstellbar. Das Verfahren ist jedoch relativ aufwendig und damit für Filtergehäuse, wie sie für die Filtrierung der Ansaugluft von Brennkraftmaschinen benötigt werden, nicht wirtschaftlich.

Aus der EP-A-0 534 079 ist ein Ansauglufffilter für insbesondere Kraftfahrzeuge bekannt. Dieses ist mit einem austauschbaren plattenförmigen Filtereinsatz versehen. Zur Versteifung des Filtereinsatzes ist ein Freiraum mit einem Gitter ausgefüllt, dieses Gitter ist mit einem umlaufenden Rahmen verbunden.

Der Nachteil bei einer solchen Anordnung ist der hohe Entsorgungsaufwand, das heißt bei einem Austausch des Filtereinsatzes muß gleichzeitig das Gitter und der mit diesem verbundene Rahmen entsorgt werden.

Grundsätzlich ist bei Produkten, die regelmäßig ausgetauscht werden müssen darauf zu achten, daß vor einer Abfallentsorgung die Abfallvermeidung Vorrang hat.

Ein Nachteil bei den bekannten Einrichtungen bzw. Verfahren besteht außerdem darin, daß verschiedene Randbedingungen, wie zum Beispiel die Schallabstrahlungseigenschaften des Filtergehäuses sowie die Reduzierung des Mündungsschalls der zu filternden Rohluft nicht berücksichtigt werden.

Der Erfindung liegt die Aufgabe zugrunde ein Filter zu schaffen, welches kostengünstig herstellbar ist und zu einer erheblichen Reduzierung des Ansauggeräuschs einer Brennkraftmaschine beiträgt.

Diese Aufgabe wird ausgehend von dem Oberbegriff des Hauptanspruchs durch dessen kennzeichnenden Merkmale gelöst.

Der Kerngedanke der Erfindung liegt in der Schaffung einer starren Gittergrundstruktur, die die Form des Filtergehäuses definiert. Diese Gittergrundstruktur wird ergänzt durch eine, das Gehäuse bildende Hülle, welche schalldämpfende Eigenschaften aufweist. Beispielsweise ist diese Hülle aus einem schalldämpfenden Material, wie Polypropylen oder TPE z.B. Santoprene, hergestellt.

In einer Ausgestaltung der Erfindung ist vorgesehen, auch den an dem Rohlufteinlaß angeordnete Ansaugschlauch aus einem schalldämpfenden Material herzustellen. Ein solcher Schlauch ist auch unter dem Begriff Geräuschverlierschlauch bekannt und besteht beispielsweise aus einer Drahtspirale, die mit einem schallabsorbierenden Material umhüllt ist.

Gemäß einer Weiterbildung der Erfindung besitzt das geräuschdämpfende Material auf der Innenseite eine rauhe Oberfläche welche gleichzeitig porös ist.

Zweckmäßigerweise kann die äußere Oberfläche des dämpfenden Materials glatt und/oder porenfrei sein. Sofern dieser Gehäuseaufbau auf der Rohluftseite des Luftfilters verwendet wird ist eine gewisse Luftdurchlässigkeit dieses Materials nicht von Nachteil.

In einer weiteren vorteilhaften Ausgestaltung der Erfindung ist das Gehäuse im 2K-Kunststoffspritzgießverfahren hergestellt. Dies bedeutet, daß in einem einzigen Kunststoffspritzgießwerkzeug zunächst die Gittergrundstruktur des Gehäuseteils geformt wird, anschließend durch Öffnen von Kavitäten Raum für das schalldämpfende Material geschaffen wird und dieses schalldämpfende Material im zweiten Spritzgießvorgang auf diese Gittergrundstruktur aufgebracht wird. Nach Erstarren des Kunststoffmaterials ist das komplette Teil entformbar.

Ausführungsbeispiele der Erfindung sind in den Zeichnungen dargestellt und werden im folgenden näher erläutert. Die Zeichnungen zeigen:
- Figur 1: eine Draufsicht auf das rohluftseite Gehäuse eines Filters,
- Figur 2: einen Schnitt durch das Gehäuse.

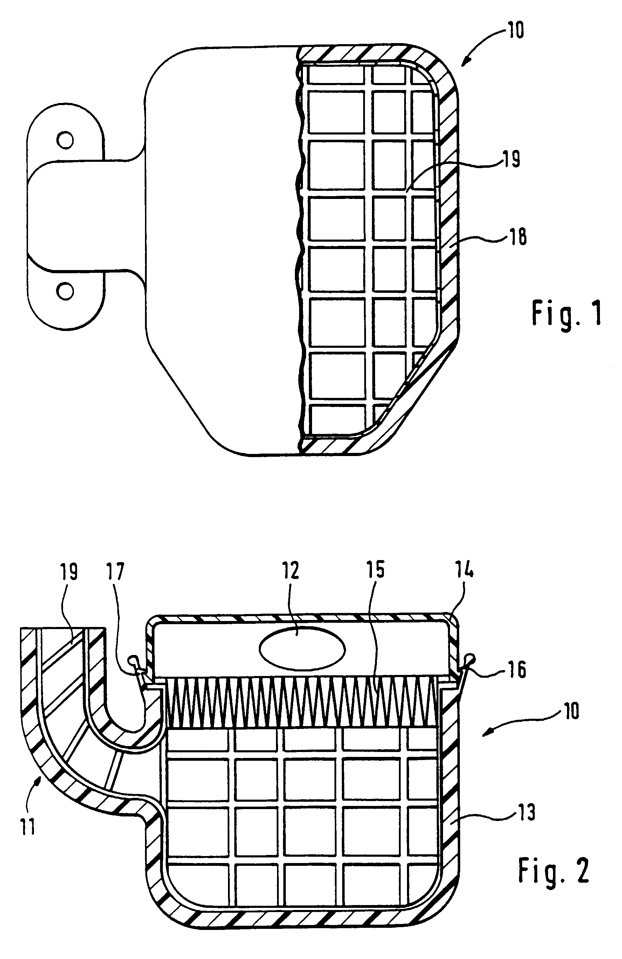

Die Figuren 1 und 2 zeigen als spritzgegossenen Hohlkörper 1 ein Luftführungsgehäuse für ein Ansaugsystem eines Kraftfahrzeugmotors mit einem seitlich abgehendem gebogenen Anschlußkrümmer 11 zum Zuführen der Rohluft und einer Austrittsöffnung 12 für die gefilterte Reinluft. Das Gehäuse besteht im wesentlichen aus einem Gehäuseunterteil 13 und einem Gehäuseoberteil 14. Zwischen beiden Gehäuseteilen ist ein Filterelement 15 eingesetzt. Diese beiden Gehäuseteile sind über Schnappverschlüsse 16, 17 miteinander verbunden. Das Gehäuseteil 13 besteht aus einer Gittergrundstruktur 19, die in einer Art Skelettbauweise hergestellt ist. Auf dieser Gittergrundstruktur 19 ist ein dämpfendes Material, wie zum Beispiel Santoprene, als Außenform 18 angeordnet. Auch der Anschlußkrümmer 11 kann, wie hier gezeigt, aus einer Gittergrundstruktur 19 bestehen und ebenfalls mit einem schalldämpfenden Material überzogen sein. Als Herstellverfahren eignet sich sowohl das 2K-Kunststoffspritzgießverfahren als auch ein Kunststoffblasverfahren bei dem die Hülle 18 zunächst als Schlauch gefertigt wird und im Blasformverfahren auf die Gittergrundstruktur aufgebracht wird. Das schalldämpfende Material weist im Inneren des Gehäuses eine rauhe Oberfläche auf, welche gleichzeitig porös ist. Durch die leicht porösen Wände wird der Schall absorbiert und damit der Mündungsschall am Eintrittsbereich der Rohluft gesenkt.

## Patentansprüche

1. Filter, insbesondere zum Filtrieren der Ansaugluft einer Brennkraftmaschine, bestehend aus einem Rohlufteinlaß (11), einem Gehäuse (13, 14), einem in dem Gehäuse (13, 14) angeordneten Filtereinsatz (15) sowie einem Reinluftauslaß (12), dadurch gekennzeichnet, daß wenigstens das den Rohluftbereich umfassende Gehäuseteil (13) eine starre Gittergrundstruktur (19) aufweist, die die Form des Filtergehäuses definiert und welche mit einem schalldämpfenden Material (18) umhüllt ist.

2. Filter nach Anspruch 1, dadurch gekennzeichnet, daß an dem Rohlufteinlaß (11) ein Ansaugschlauch angeordnet ist der ebenfalls aus einem schalldämpfenden Material besteht.

3. Filter nach einem der vorherigen Ansprüche, dadurch gekennzeichnet, daß das schalldämpfende Material (18) auf der der Rohluftfilterseite zugewandten Fläche eine rauhe oder poröse Oberflächenstruktur aufweist.

4. Filter nach einem der vorherigen Ansprüche, dadurch gekennzeichnet, daß das Gehäuse (13) im 2K-Kunststoffspritzgießverfahren hergestellt ist.

5. Filter nach einem der vorherigen Ansprüche, dadurch gekennzeichnet, daß das schalldämpfende Material (18) an der nach außen gewandten Oberfläche glatt und porenfrei ist.

## Claims

1. Filter, more especially for filtering the intake air of an internal combustion engine, comprising an unfiltered air inlet (11), a housing (13, 14), a filter insert (15) which is disposed in the housing (13, 14), and a filtered air outlet (12), characterised in that at least the housing portion (13) defining the unfiltered air region is formed from a rigid basic lattice structure (19), which defines the configuration of the filter housing and is covered with a sound-absorbing material (18).

2. Filter according to claim 1, characterised in that a suction tube, which is also formed from a sound-absorbing material, is disposed on the unfiltered air inlet (11).

3. Filter according to one of the preceding claims, characterised in that the sound-absorbing material (18) has a rough or porous surface structure on the face orientated towards the unfiltered air side of the filter.

4. Filter according to one of the preceding claims, characterised in that the housing (13) is produced by the two-component plastics material injection moulding method.

5. Filter according to one of the preceding claims, characterised in that the sound-absorbing material (18) is smooth and pore-free on the outwardly orientated surface.

## Revendications

1. Filtre, en particulier pour filtrer l'air aspiré par un moteur à combustion interne, comportant une entrée d'air brut (11), un boîtier (13, 14) dans lequel est logé un insert filtrant (15), une sortie d'air épuré (12),
caractérisé en ce qu'
au moins la partie (13) du boîtier entourant la zone d'air brut présente une structure de base, rigide, en forme de grille (19) qui définit la forme du boîtier du filtre et qui est entourée par un matériau (18) amortissant les sons.

2. Filtre selon la revendication 1,
caractérisé en ce que
sur l'entrée d'air brut (11) est monté un tube d'aspiration constitué également d'un matériau amortissant les sons.

3. Filtre selon l'une des revendications précédentes,
caractérisé en ce que
le matériau (18) amortissant les sons présente sur sa face située du côté où se trouve le filtre d'air brut, une structure superficielle rugueuse ou poreuse.

4. Filtre selon l'une des revendications précédentes, caractérisé en ce que le boîtier (13) est fabriqué par le procédé d'injection de matière plastique à deux composants.

5. Filtre selon l'une des revendications précédentes, caractérisé en ce que le matériau (18) amortisseur des sons est, sur sa surface externe, lisse et non poreux.
